# EUROPEAN PATENT APPLICATION

(11) **EP 1 113 666 A1**
(43) Date of publication of application: **04.07.2001**
(21) Application number: 00311561.5
(22) Date of filing: 21.12.2000
(51) Int. Cl.: H04N 5/00

(54) **Data processing apparatus**

(30) Priority: 30.12.1999 GB 9930837; 10.02.2000 GB 0003106
(71) Applicant: Nokia Corporation, 02150 Espoo (FI)
(72) Inventor: Burda, Peter, 58634 Linköping (SE); Eneling, Rasmus, 582 46 Linköping (SE)
(74) Representative: Read, Matthew Charles

(57) **Abstract**

A set top box for a television receiver is configured to store and replay programming content in a data storage device such as a Winchester disc (6) under the control of data processor (8) having a main memory (9), utilising a file system in which data can be written to and read from individually addressable regions. The addresses of the regions are held in the main memory during operation. When writing data to more than one of the regions a link is stored in one of the regions to provide data concerning the location of another of the regions that stores data from the file. The link can be used to recover the file in the event of a system crash such as a loss of power.

## Description

This invention relates to data processing apparatus and has particular but not exclusive application to multimedia equipment such as set top boxes for televisions in which data is written to and read from a storage medium.

Known data processing apparatus such as a personal computer includes a digital processor connected by a common bus to a main memory such as a random access memory (RAM) and also a read only memory (ROM). The RAM stores the outcomes of computations performed by the processor in use. The RAM is volatile and so stored information is lost when power is switched off. Additionally, a non-volatile storage medium is coupled to the bus to which data can be written and read under the control of the processor. Winchester discs, also known as hard drives, are commonly used to provide a non-volatile storage medium.

Information interchange between the processor and the various components connected to the bus is provided by a basic input/output system (BIOS) and operating systems software controls operation of the BIOS. Typically, the operating system includes the file system and a graphical user interface. An example of such an operating system is Microsoft™ Windows e.g. Windows 98™. The operating system allows application programs to be run on the computer. As well known in the art, programs and data are arranged in files, which are grouped in directories also known as folders. The file system of the operating system allows files to be organised in a hierarchy, and both read from and written onto the hard drive.

Considering the hard drive in more detail, it typically comprises a disc of magnetic material, which is rotated by a motor, together with a read/write head assembly which can be moved radially inwardly and outwardly of the disc so as to read and write data in concentric rings known as tracks on the disc. The file system is configured to treat each track as a number of individual, radially extending sectors. Conventionally, each sector can contain 512 bytes of data and the sectors are used as the basic unit for storing data on the hard drive. However, often, a sector is too small for the operating system to handle satisfactorily and so conventionally, sectors are grouped together in clusters. Typically, clusters are formed of 2, 4, 8, 16, 32 or 64 sectors depending on the total storage capacity of the hard drive.

Files to be written to the hard drive may occupy more than one cluster and a table, known as the file allocation table (FAT) is maintained in an administration region on the magnetic disc. The administration region includes a root directory for files recorded on the disc and the FAT provides a list of the addresses of clusters in which the file is stored. The clusters need not be contiguous. The FAT includes details of the locations of each cluster on the disc and, whether the cluster is empty, corrupted or, if it contains part of the file, the location of the next cluster containing a portion of the file. In this way, by reference to the directory and the FAT, it is possible to read successive clusters which store the data for a particular file.

Because of the volatile nature of the RAM, the FAT and the directory are recorded on the magnetic disc itself. Thus, in the event of a power corruption or failure, both the file structure and the stored data can be read when power is restored.

A problem with this arrangement is that each time a file is read or written, reference needs to be made to the FAT and the directory, which requires movement of the read/write head to the administration region of the disc, as well as to the clusters which store the data. In order to reduce the number of head movements, disc cache programs have been developed which provide a copy of the FAT in the RAM. In this way, the disc cluster map held in the FAT can be read in a much faster way than having to read the FAT from the disc itself. However, even with a disc cache program, the FAT recorded on the disc itself needs to be updated regularly to ensure that if a power failure occurs, data can be restored. It would not be possible to rely solely on the FAT in RAM because the RAM is volatile and its data is lost in the event of a power failure.

As known in the art, the movement of the read/write head that occurs when moving between tracks for a read/write operation, produces a certain amount of noise which can be distracting to the user in certain circumstances. For example, it has recently been proposed to include hard drives in a set top box for television and other multimedia equipment. As known in the art, set top boxes can be used to receive satellite, terrestrial and cable transmissions and process them into a format suitable for reception by a conventional television set. An overview of high speed data links suitable for carrying out digital TV signals is given in a collection of articles in Scientific American, October 1999, pp. 73-75. Recently, it has been proposed to include a hard drive in a set top box to allow digital satellite and cable transmissions to be recorded and played back later. The received program information may be in MPEG II format. The set top box receives the stream of digital data from the satellite or cable link, parses it, and feeds it through a processor which operates as previously described, so that the program data is recorded digitally in files on the hard drive. The program data can then be replayed from the hard disc through a conventional video decoder and fed to the television set.

However, during recording and replaying of the program data, the movement of the head of the hard drive produces noise which can be distracting to the viewer. In the past, attempts to reduce the noise produced by a hard drive have involved changes to the mechanical configuration of the drive itself. The present invention adopts an alternative approach, which reduces the number of head movements to reduce noise and increase the speed of data transfer.

In accordance with the invention there is provided data processing apparatus including a data processor, a main memory for use during operation of the processor, a data storage device that includes a storage medium and a reading and a writing device to read and write data to and from the storage medium, and a file system to operate the data storage device so that files of data can be written to and read from a plurality of regions of the storage medium having individually addressable locations, the addresses of the regions being held in the main memory during operation of the processor, the file system being operable so that when data for a file is written to the storage medium in a plurality of said regions, a link is stored in one of the regions so as to provide data concerning the location of another of the regions that stores data for the file.

Thus, in accordance with the invention, the addresses of the individual regions can be held in the main memory during operation of the processor so that it is not necessary to refer to the storage medium itself for address information during operation. Furthermore, because the link between the regions is stored on the storage medium itself, the file structure can be recovered in the event of a power discontinuity, by recovering and using the links.

The data storage medium may include an administration region that includes a directory of the files stored in the storage medium, and the location of one of the regions for the files respectively. The file system may be operable to provide a predetermined mark in the directory e.g. "file dirty" mark when a file stored in the storage medium has been opened in use, and to remove the mark from the directory in response to the file being closed and any changes thereof having been recorded in the administration region.

The file system may be operable to execute a file recovery procedure in which, after a power discontinuity, the file system identifies from the directory on the storage medium those files marked with the "file dirty" mark, and for each file found, rebuilds the locations of the regions of the storage medium in the main memory for the file by determining the location of the predetermined file region from the directory, and successively determining the locations of the next regions containing data for the file from the link stored therein, until the locations of the regions of the file are recovered.

Thus, in accordance with the invention, the apparatus is capable of recovery in the event of a power discontinuity such as a power failure but has the advantage that it is not necessary to provide the locations of all the regions and their relationship to the files, in a conventional FAT on the storage medium and to continuously update the FAT on the storage medium during use in response to each change that occurs. This substantially reduces the number of read/write operations required during use, with a subsequent significant reduction in the noise produced by operation of the reading and writing device.

In order that the invention may be more fully understood, an embodiment thereof will now be described by way of example with reference to the accompanying drawings in which:
Figure 1 is a schematic block diagram of a set top box incorporating data processing apparatus according to the invention, during recording of a program;
Figure 2 corresponds to Figure 1, during playback;
Figure 3 is a schematic block diagram of the file system processor and hard drive shown in Figures 1 and 2;
Figure 4 illustrates schematically the software hierarchy utilised by the processor configuration shown in Figure 3;
Figure 5 illustrates schematically the configuration of sectors of the hard drive; Figure 6 is a schematic illustration of the organisation of the FAT, the directory structure and clusters on the hard drive;
Figure 7 is a flow diagram of a start up routine for the set top box;
Figure 8 is a flow diagram of a routine for writing a data file to the hard drive; Figure 9 is a flow diagram of a routine for closing a file;
Figure 10 is a block diagram of a routine for reading a data file from the hard drive; and
Figure 11 is a flow diagram for a routine to recover file cluster allocation information in the event of a power failure.

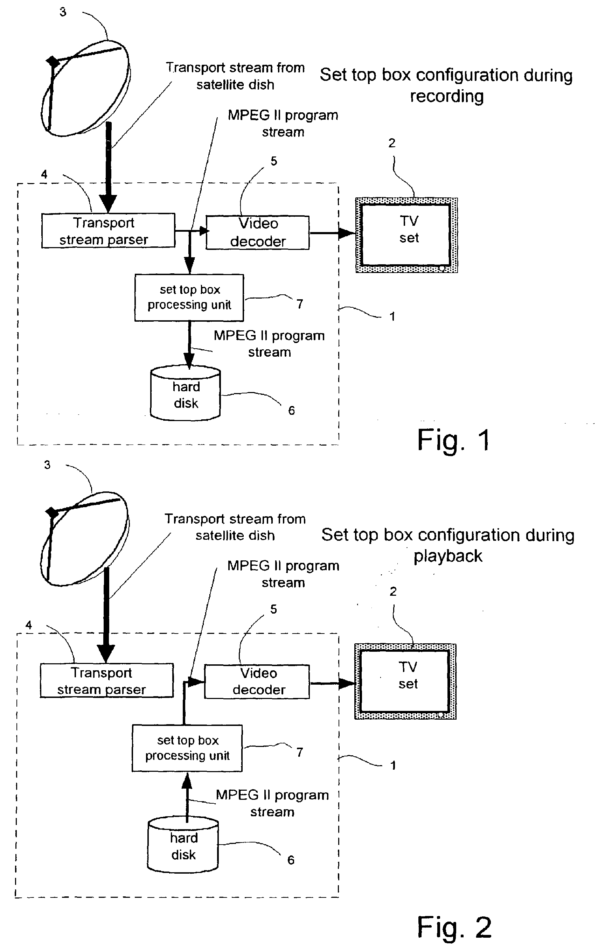

Figure 1 illustrates a set top box incorporating data processing apparatus according to the invention, during a recording of a program. The set top box is shown within hatched outline 1, connected between a conventional television set 2 and a satellite dish antenna 3.

The dish antenna 3 receives a satellite transmission that comprises a transport stream that includes a number of programs multiplexed together. The transport stream is fed to a transport stream parser (TPP) 4, which filters out digital signals for a program selected by the user. The signals are typically in MPEG II format and comprise audio and video streams. As shown in Figure 1, the video stream is fed to a conventional video decoder 5, which converts the digital signals into a suitable RF modulated form to be supplied to the aerial socket of the conventional TV set 2. It will be understood that the digital audio signals are similarly fed to an audio decoder (not shown). Additionally, a program channel can be recorded in the digital MPEG II format on a hard disc 6. Digital MPEG II signals from the parser 4 are processed by a set top box processing unit 7 to be recorded on the hard disc 6, in a manner to be described in more detail hereinafter.

The configuration of the set top box during playback is shown in Figure 2. The processing unit 7 reads the stored MPEG data from the hard drive 6 and feeds it to the video decoder 5 so that the program can be replayed on television set 2.

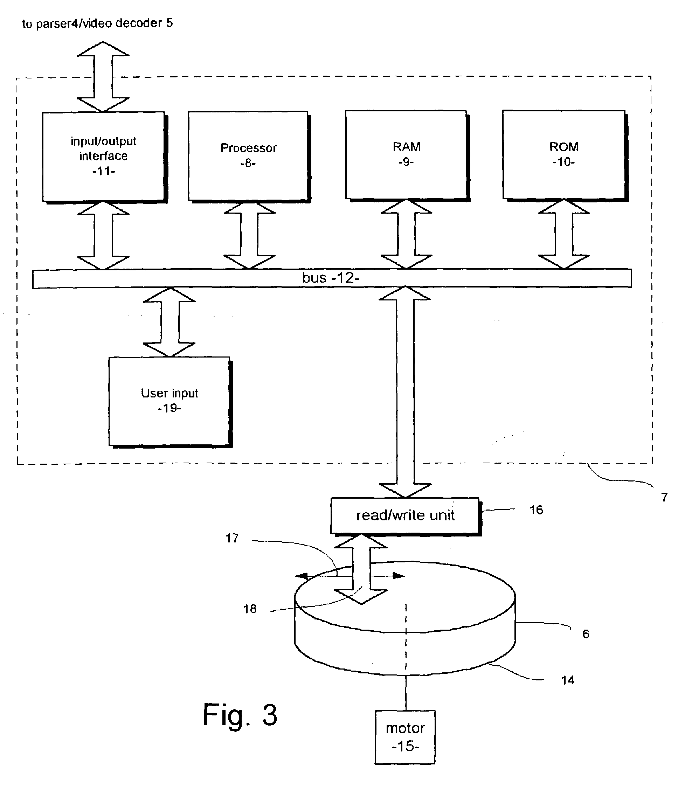

The processing unit 7 and the associated hard drive 6 are shown in more detail in Figure 3. The processor configuration 7 includes a digital processor 8 such as an Intel Pentium™ processor with an associated RAM 9, ROM 10 and an input/output interface 11 that is configured to provide a signal connection to the parser 4/video decoder 5 shown in Figure 2. These components are interconnected by a common bus 12 in a manner well known *per se.*

The hard drive 6 is also connected to the bus 12. The hard drive includes a magnetic disc 14 axially rotated by motor 15, with a read/write head 16 which can be moved radially inwardly and outwardly of the disc in the direction of arrow 17 to read and write data in concentric tracks on the disc 14 as shown schematically by arrow 18, as well known *per se* to those skilled in the art.

The user input interface 19 is connected to the bus, to receive control instructions from a user, for example to select a recording mode or replay mode. Instructions may be provided to the interface 19 by means of a remote controller (not shown).

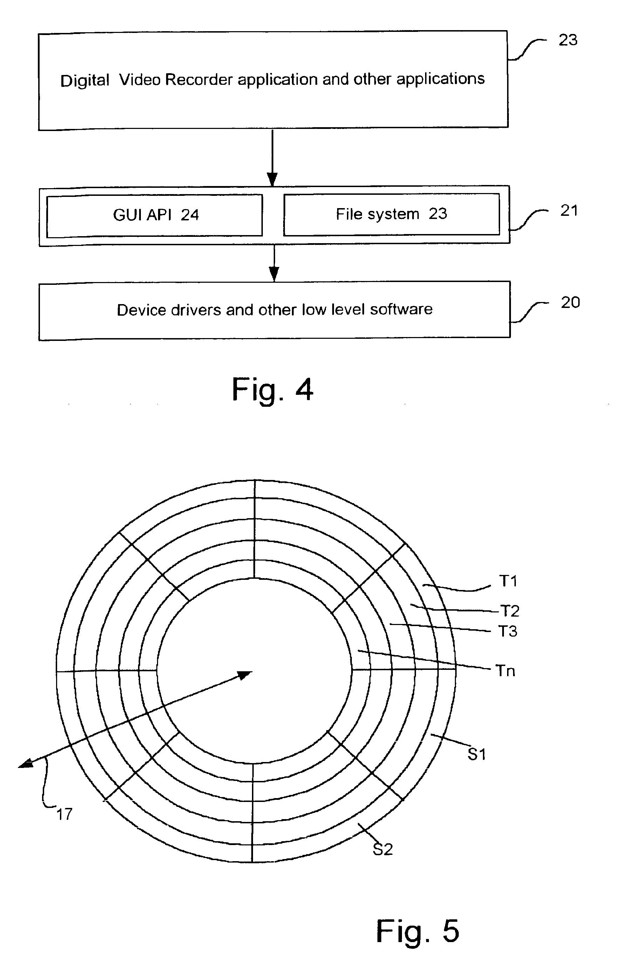

The overall hierarchical structure of the operating software for the processing unit 7 is shown in Figure 4. At the lowest level, device drivers 20 and other low level software provides interfaces between the various hardware items in the processor configuration 7 shown in Figure 3 to allow information interchange between them over the bus 12. An operating system 21 provides control of the device drivers 20. An example of such an operating system is Microsoft™ Windows e.g. Windows 98™ although DOS or other operating systems can be used as well known in the art. The operating system 21 allows application programs 22 to be run on the processor 8. The application programs 22 include a digital video recorder (DVR) program which allows programs from the satellite broadcast to be recorded and replayed, using the hard drive 6 as a recording medium, together with other user selectable control functions. The DVR program is controlled by the user through the input interface 19 shown in Figure 3.

In the usual way, programs and data are arranged in files which are grouped in directories also referred to herein as folders. The operating system 21 includes a file system 23 to allow files to be organised in a hierarchical structure, labelled, and amongst other things be written to and read from the hard drive 6. The operating system also includes a graphical user interface 24 which can be used to provide a display of the operational configuration of the set top box on the TV set 2 shown in Figure 1.

Figure 5 illustrates the way in which the magnetic disc 14 of hard drive 6 is formatted for use with the file system 23. As previously explained, the read/write head 16 can be moved radially across the rotary disc 14 in the direction of arrow 17 and data can be recorded on and read from the disc in a series of concentric tracks T1, T2, T3... Tn shown schematically in Figure 5. Each track T is treated as comprising a series of radially extending sectors S1, S2, etc. The sectors S constitute the basic building blocks for stored data. Typically, each sector S can contain 512 bytes.

The sectors are gathered in clusters in order to provide a more convenient disc unit to read and write data. Typically, the sectors are gathered in clusters of 2, 4, 8, 16, 32 or 64 sectors depending on the overall storage capacity of the disc 14.

The storage volume of the disc 14 is partitioned and each partition logically acts like an individual hard disc. Each partition may have an individual file system installed on it.

The top level structure of the logical organisation of the disc 14 comprises a partition table which defines the clusters that make up the individual partitions.

For each partition which contains a file system, there is provided an administration area which contains a FAT, a root directory, sub-directories and other administrative data for the file system, together with a data area that contains data clusters defining the files. Thus, each file has an associated file node in the administrative area and the data for the file is held in one or more clusters in the data area.

In the set top box, booting information is held in a separate flash memory, not shown, rather than on the hard drive as in a conventional PC.

The FAT is recorded in duplicate to provide redundancy and indicates the clusters in which a particular file is stored in the data area of the disc. The FAT consists of a table of e.g. 16-bit entries each of which contains information about an individual cluster. An example is given below in Table 1.

In the Table, the entry for each cluster gives four possibilities, each with a different four digit hexadecimal number as shown.

**Table 1**

| | |
|---|---|
| FAT cluster entry | Value |
| The cluster is part of a file and is the last cluster in the file | FFFF |
| The cluster is part of a file. This is the number of the next cluster in the same file. | Like A8F7 |
| The cluster is empty, thus free | 0000 |
| The cluster contains defective sectors | FFF7 |

The file is read from the disc by the following routine. An address for the first cluster of the file is stored in the corresponding file node in the administrative area for the disc partition. This address can be used directly to obtain the first cluster of the file. In order to get the next cluster of the file, this address is used as an index in the FAT. As shown above in Table 1, an address for the next cluster in the file is stored at the indexed position in the FAT, and this address can be used to retrieve the next cluster. The address can again be used to index the address of the next following cluster and the process is repeated until all the clusters that make up the file have been retrieved. This process enables the file to be read from the disc 14, cluster by cluster.

Every time a file is written to the disc, vacant clusters are found for it from the FAT and the information for the newly stored file is then stored in FAT to facilitate retrieval.

At start up, the FAT is copied from the disc 14 into RAM 9 so that it can be accessed at a much faster rate by the operating system 21 than if the operating system had to read the FAT from the disc at each request. This will be explained in more detail hereinafter. However, the FAT held in the RAM 9 is volatile and its data is lost if there is a power failure.

In order to overcome this problem, in the example of the present invention, the relationship between the clusters that store a particular file is recorded in the clusters themselves, so as to provide a link between them.

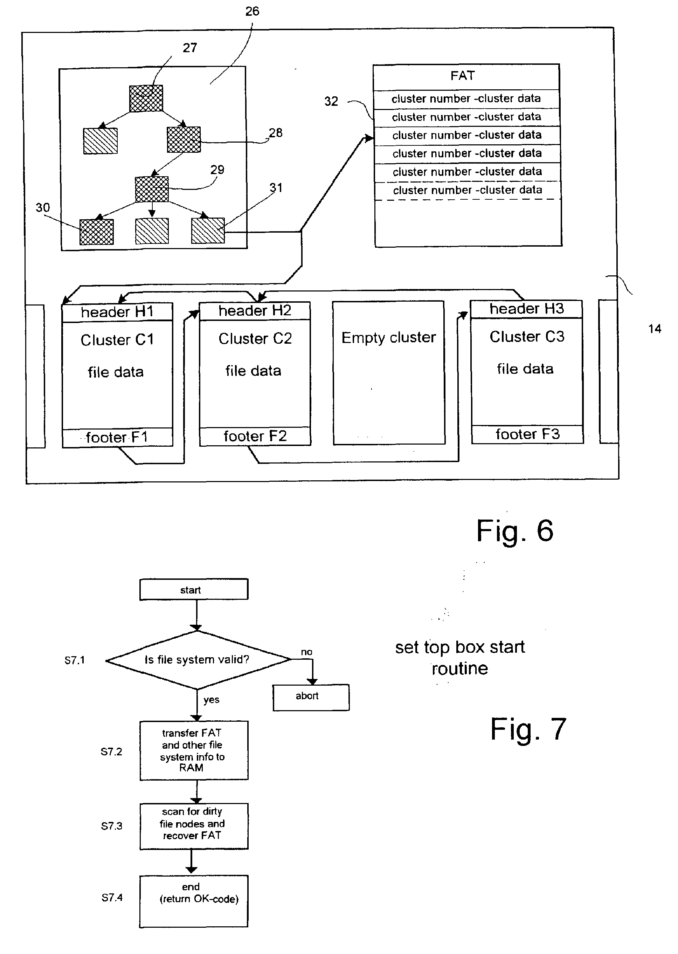

Figure 6 is a schematic illustration of the organisation of the disc 14. The disc volume 14 contains a record of the file directory structure 26 which includes a root 27 and a hierarchical organisation of directory nodes 28, 29, 30. Also shown are file nodes, such as file 31. The disc volume 14 also includes FAT 32 shown schematically.

Also, the clusters which make up the file 31 are shown. In this example, data for the file 31 is recorded in three clusters C1, C2, C3. Each cluster is provided with a footer. Thus, cluster C1 is provided with a footer F1. Similarly, cluster C2 has a footer F2 and cluster C3 has a footer F3. Each of these clusters contains file data above the footers. An empty cluster C4 is shown between the clusters C2 and C3 that contain file data. As shown in Figure 6, the cluster footer information F1 provides information about the address of the next cluster that records data for the file, namely cluster C2. Footer F1 and all the other footers for a particular file contain a unique identification number which allows them to be validated for the file concerned and this unique number is recorded in the corresponding file node of the directory structure 26 for validation purposes. Thus, the footer F2 contains the unique code together with address information for cluster C3.

The clusters C1, C2 and C3 also include headers H1, H2 and H3 which contain the unique identification code for the file. The headers refer back to the preceding cluster header for the file . Thus, header H3 refers back to header H2 and header H2 refers back to header H1. The headers allow for efficient data rewind procedures and will not described further herein.

In use, when writing to a file is started, it is given a predetermined "file dirty" mark in the corresponding file node of the directory structure 26. Thus, in this case, when writing to the file recorded in clusters C1, C2, C3 is started, a "dirty" mark is placed in the file node 31, and is only removed when the file is closed and the FAT 32 has been updated on hard disc 14. This enables the file to be recovered in the event of a power failure or other discontinuity as will be explained later.

### Start up routine

Referring to Figure 7, upon start-up of the system, the file system structures recorded on the disc 14 are checked using a checksum as shown at step S7.1. This ensures that there is a valid file system installed on the partition of disc 14 being mounted. Assuming that the outcome of this check is satisfactory, the file system structures 26 are then set up in RAM 9 and the FAT 32 from the disc 14 is copied into RAM 9 (Figure 3). This is shown at step S7.2 in Figure 7. Thus, when data is subsequently written to and read from the disc 14, reference can be made to the volatile FAT in RAM 9 rather than to the hard *copy* on the disc 14, and, as previously explained, this enables the operating system 21 to work efficiently by substantially reducing the number of read/write operations to the disc 14, with a consequent significant reduction in the noise level produced by operation of the read/write head 16.

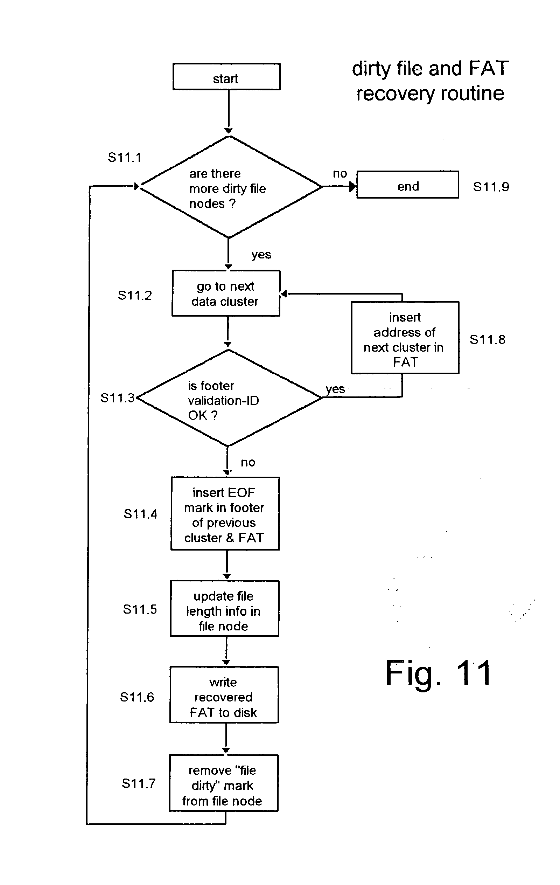

At step S7.3, file nodes in the file system directory 26 on disc 14 are scanned for "file dirty" marks, and if found, the FAT for corresponding clusters of the file concerned is recovered in accordance with the invention, as will be explained in detail later with reference to Figure 11.

The start up routine comes to an end at step S7.4.

### Write operation

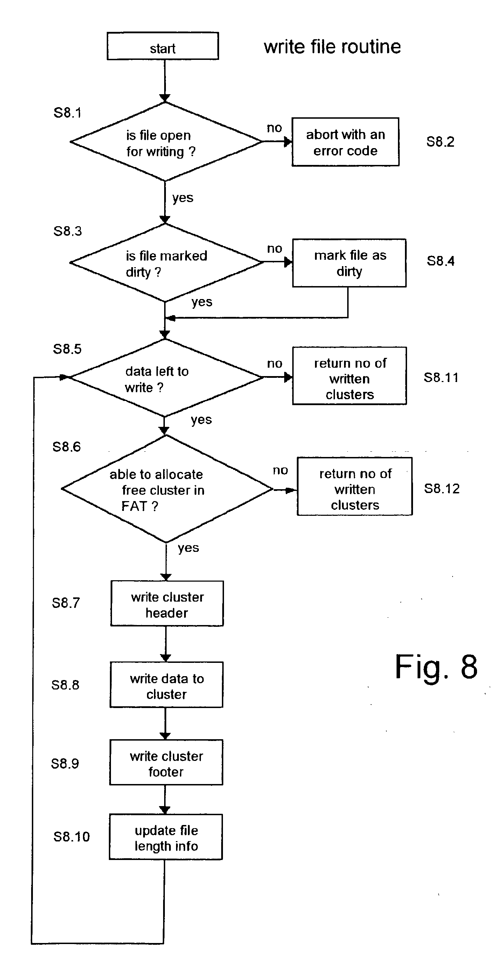

Figure 8 illustrates a way in which a file is written to the disc 14. At step S8.1, a check is made to see whether the file is open for writing to the disc. If not, the routine is aborted and an error code is generated as shown at step S8.2.

Then, at step S8.3, a check is made to see whether the file is marked "dirty". If not, the open file is marked "dirty" at step S8.4. This ensures that a file dirty mark is included in the file node for the file concerned, as previously discussed.

Then, the file data is written into a number of clusters on the disc 14, cluster by cluster, as will now be explained.

At step S8.5, a check is made to see whether the cluster writing process has been completed i.e. whether there is data left to be written onto the disc from the file. Assuming that there is data to be written, reference is made to the FAT in RAM 9 at step S8.6 in order to locate a free cluster. Assuming that a suitable cluster is located, the cluster header is written to disc 14 at step S8.7. As previously discussed, the header includes a unique identification number for the file concerned. The header is written into a first sector of the cluster. Then, at step S8.8, subsequent sectors of the cluster are written with data from the file. At step S8.9, a cluster footer is written in the last sector of the cluster concerned. As previously explained, the cluster footer contains the unique identification number for the file.

Having successfully written data in the cluster, the routine at step S8.10 updates information concerning the length of the file in the file node for the file concerned, which is held in the RAM 9 during operation.

The routine then returns to step S8.3 and the process repeats for further blocks of data until the entire file is written to successful clusters. When this is completed, the number of written clusters is returned at step S8.11 to enable a check to be carried out that the correct number of clusters has been written for the file.

When the disc partition becomes full so that there are no free clusters to which file data can be written, the routine terminates at step S8.6 and the number of clusters written is returned at step S8.12 for similar checking procedures to those associated with S8.11.

The described cluster writing routine results in the FAT being updated in RAM 9 each time a new data cluster is successfully allocated. Thus, the FAT updating process is implicit in step S8.6. The FAT entry for the cluster previous to the allocated one is updated with the newly allocated cluster, since it is the previous cluster entry in the FAT which holds the address of the newly located cluster. The very first time a cluster is allocated for the written file, the address for the first cluster is written into the corresponding file node of the file directory structure held in RAM 9

### Close file

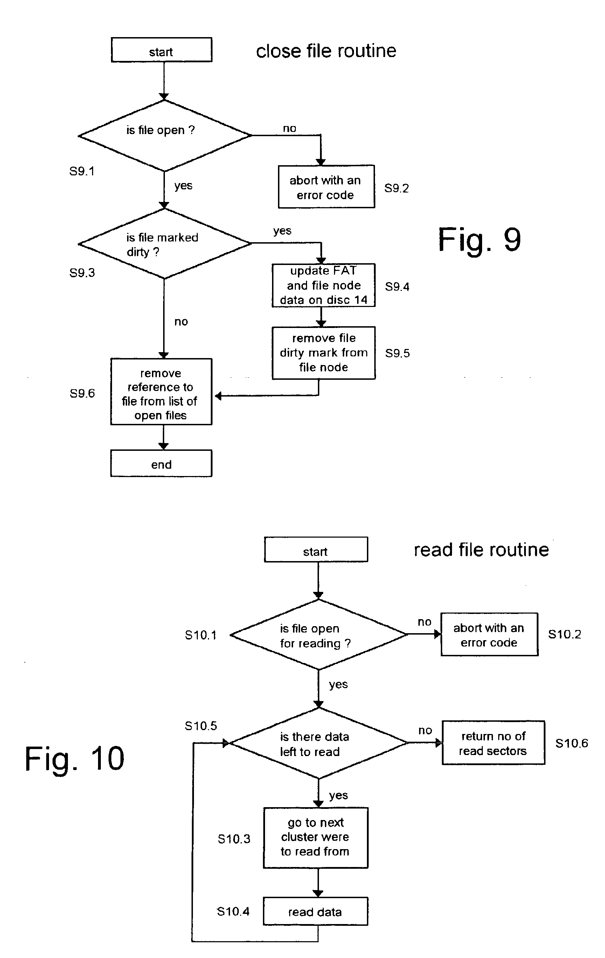

After the file has been written to disc 14, it needs to be closed and the file closing routine is shown in Figure 9. At step S9.1, a check is made to determine whether the file is open. If not, the routine is aborted and an error code produced, as shown at step S9.2.

If the file is open and needs to be closed, a check is made at step S9.3, to determine if the file is marked dirty. As previously explained, at the start of the file writing process, the file is marked dirty at step S8.4 (Figure 8). The file dirty mark signifies that the file node and FAT information recorded on the disc needs to be updated to include information concerning the newly written file. The copy of the file directory structure with the file node for the file concerned, together with the FAT held in RAM 9 contains the updated information, which is then written back on to the node structure 26 and FAT 32 on disc 14. This process is carried out at step S9.4. Then, at step S9.5, the file dirty mark is removed from the corresponding file node in the directory structure 26. The file dirty node is only removed after the file directory structure 26 and the FAT 32 have been successfully updated on disc 14, to avoid loss of the file in the event of a power failure, as will be more evident hereinafter.

If at step S9.3, the file is not found to be marked dirty, or when the file dirty mark has been removed from the directory at step S9.5, then, at step S9.6, reference to the file is removed from a list of open files maintained in RAM 9. This list provides definitive data about whether is a file is open or closed.

### Read operation

Figure 10 illustrates the process for reading a file. At step S10.1, the aforementioned file open/closed list in RAM 9 is checked to see whether the file is open for reading. If not, the routine is aborted and an error code produced as shown at step S10.2.

Assuming that the file is open for reading, its data is read cluster by cluster. The initial cluster location for the file is located at the corresponding file node recorded in the directory structure 26 on the disc and, at step S10.3, the read/write unit 16 (Figure 3) goes to the cluster concerned. At step S10.4, data is read from the cluster.

The routine then returns to step S10.5 in order to check whether there are further data clusters to be read. If so, the location of the next cluster is located from the FAT held in RAM 9, at step S10.3 and the data for the relevant cluster is read at step S10.4. This routine repeats itself until all data has been read from the clusters which contain data for the file. When there is no further data to be read, information concerning the number of read clusters is provided to allow integrating checking to be carried out as previously described with reference to steps S8.11 and S8.12 at step S10.6 and the process terminates.

### File recovery

The file allocation recovery process that occurs in response to a power failure will now be described with reference to Figure 11. As previously explained, the FAT held in RAM 9 during operation is volatile and will be lost in response to a power failure. A version of the FAT is also held in a non-volatile form on the disc volume 14, namely FAT 32 shown in Figure 6. However, certain files will have been opened and the cluster configuration information for the open files may not necessarily have been updated in FAT 32 on disc 14. The process shown in Figure 11 makes use of the file dirty marks recorded in the directory structure 26 to signify files which may require attention, together with the links between the clusters for these files to enable the cluster allocation for the files concerned, to be recovered.

At step S11.1 in Figure 11, a file dirty node is identified in the directory structure 26 and at step S11.2, the address of the first cluster of the file is obtained from the file node. Then, at step S11.3, the footer of the first cluster is read and the unique identification number is checked against the corresponding copy written in the file node of the directory structure 26. If the file identification is valid in the footer, the address of the next cluster is obtained from the footer and entered into FAT 32 at step S11.8. Then, at step S11.2, the read/write head goes to the address of this next cluster and the process is repeated.

In this way, the addresses of successive clusters for the file are recovered and written into the FAT 32, thereby enabling the file to be recovered. Considering for example the file configuration of Figure 6, the routine would initially recover cluster C1 using the address information in file node 29. Then the footer F1 is recovered, providing the address of cluster C2 which is written into FAT 32. Then the footer F2 of cluster C2 is recovered, giving the address information for cluster C3.

However, when cluster C3 is reached, it is not possible to unambiguously identify the footer F3 and thus the test at S11.3 fails so that at step S11.4, an end of file marker EOF is inserted into the footer of the previous cluster (cluster C2 in this example) and also in the FAT for cluster C2 in RAM 9. Thus, the process does not recover the last cluster of the file. Accordingly, the file length is updated at step S11.5 in the file node 29 of Figure 6.

Then, at step S11.6, the recovered FAT is transferred from RAM 9 to the disc 14 i.e. into FAT 32. It will thus be understood that the file recovery process recovers all of the clusters apart from the last. The loss of this last cluster results in the loss of only a few seconds of recorded video data for the bit rates used currently for digital video broadcasts e.g. 7 Mbit/s. In the present application the lost cluster is not needed for the rest of the file to be utilised. Thus, when replayed, the recovered data clusters for the file will provide recorded video data, but with the last few seconds of the recording missing, due to the loss of the last cluster.

Then, at step S11.7, the file dirty mark is removed from the corresponding file node in the directory structure 26.

The process then repeats itself for other file dirty marks in nodes of the directory structure 26. The file dirty nodes are located by the test at step S11.1 and when there are no more file dirty nodes to be processed, the process ends as shown at step S11.9.

The recovery process benefits from the use of very large cluster sizes e.g. 8Mb or above because this reduces the number of links that need to be followed between successive clusters.

The use of large clusters in turn reduces the number of read/write housekeeping operations required by the read/write unit 16 of the hard disc 6 shown in Figure 3. Thus the noise produced by the hard drive 6 is substantially reduced, thereby reducing disturbance to a viewer of a program on the television set 2.

The cluster size used is a compromise between the amount of data lost that occurs during the previously described file recovery process i.e. the loss of the last cluster and the maximum cluster switch frequency that can be achieved by the particular read/write unit.

As an example, an 8Mb cluster size can be used which will result in a maximum data loss of 8Mb whenever a file has to be recovered. The 8Mb cluster size corresponds to approximately 10 seconds of video at a bit rate of 7 Mbit/s and also causes distant disc head movements at most every tenth of a second.

Many modifications and variations of the described example of the invention can be carried out. For example, the storage medium has been described as a magnetic storage medium but it will be understood that optical storage media such as DVD can be used. Furthermore, different operating systems and FATs can be modified for use according to the invention, for example FAT 16, FAT 32, HPFS (high performance file system) from OS/2, NTFS, ISO9660, UDF and the filing system used for UNIX.

Furthermore, the invention is not restricted to set top boxes and can be used for other multimedia devices which incorporate storage media such as games machines and home automation devices.

## Claims

1. Data processing apparatus including a data processor, a main memory for use during operation of the processor, a data storage device that includes a storage medium and a reading and a writing device to read and write data to and from the storage medium, and a file system to operate the data storage device so that files of data can be written to and read from a plurality of regions of the storage medium having individually addressable locations, the addresses of the regions being held in the main memory during operation of the processor, the file system being operable so that when data for a file is written to the storage medium in a plurality of said regions, a link is stored in one of the regions so as to provide data concerning the location of another of the regions that stores data for the file.

2. Apparatus according to claim 1 wherein the storage device is configured so that the storage medium is configured in a plurality of sectors and the regions comprise clusters of the sectors, the data for the file being written to the clusters such that they have a footer, the footer of one of the clusters including data concerning the location of the next cluster that contains data for the stored file.

3. Apparatus according to claim 2 wherein the footer of one of the clusters includes an identification code also contained in the footer of the next cluster that contains data for the stored file.

4. Apparatus according to claim 3 wherein the footers are stored in respective ones of the sectors that comprise the clusters.

5. Apparatus according to any preceding claim wherein the data storage medium includes an administration region in which is stored a directory of the files that are stored in said regions and the location of a predetermined one of the regions storing data for the files respectively.

6. Apparatus according to claim 5 wherein the file system is operable to provide a predetermined mark in said directory when a file stored in said storage medium has been opened, and to remove said mark from the directory in response to the file being closed and data concerning said regions for the closed file having been written on the storage medium.

7. Apparatus according to any preceding claim wherein the file directory includes data concerning a predetermined one of the regions of the storage medium in which the file is stored and the address information held in the main memory, in use, includes data concerning other of ones of the regions that store the file.

8. Apparatus according to claim 6 wherein the file system is operable to execute a file recovery procedure wherein, after a power discontinuity, the file system identifies from the directory on the storage medium those files marked as dirty, and for each file found, rebuilds the locations of the regions of the storage medium for the file by determining the location of said predetermined file region from said directory, and successively determining the location of the next region containing data for the file from the link stored therein, until locations of the regions for the file are recovered.

9. Apparatus according to any preceding claim wherein the address information held in the main memory comprises a file allocation table for the storage device, containing addresses of the regions in which particular files are stored, the table being updated when files are written to the storage medium.

10. Apparatus according to claim 9 wherein the file system is operable to store the file allocation table in the storage medium in response to closure of the file.

11. Apparatus according to any preceding claim wherein said regions contain at least 8Mb of data.

12. A multi-media terminal including data processing apparatus according to any preceding claim.

13. A set top box including data processing apparatus according to any preceding claim.

14. A method of storing data in a data processing apparatus including a data processor, a main memory for use during operation of the processor, a data storage device that includes a storage medium, the method including:
operating the data storage device so that files of data are written to and read from a plurality of regions of the storage medium that have individually addressable locations,
maintaining information concerning the addresses of the regions for the files in the main memory, and
when a file of data is written to the storage medium in a plurality of said regions, storing in one of the regions a link that provides information concerning the location of another of the regions that stores data for the file.

15. A method according to claim 14 including recovering information about the regions which contain data for files after the occurrence of a power discontinuity, by determining which files were open at the time of the power discontinuity, and for each file determined to be open, locating one of the regions thereof, and from the located region, using the link stored therein to determine the location of at least one other region thereof of the file.

16. A file system configured to operate a data processing apparatus as claimed in any one of claims 1 to 13.

17. A computer program comprising a file system configured to operate data processing apparatus according to a method as claimed in claim 14 or 15.
